# EUROPEAN PATENT SPECIFICATION

(11) **EP 1 196 003 B1**
(45) Date of publication and mention of the grant of the patent: **18.03.2009**
(21) Application number: 01308148.4
(22) Date of filing: 25.09.2001
(51) Int. Cl.: H04Q 9/00, G05D 23/19, H04L 12/28

(54) **Remote monitoring and control of HVAC devices**
Fernüberwachung und Fernsteuerung von HVAC Geräten
Télésurveillance et télécommande des HVAC appareils

(30) Priority: 05.10.2000 US 679853; 06.10.2000 US 684174
(43) Date of publication of application: 10.04.2002
(73) Proprietor: CARRIER CORPORATION, Farmington, Connecticut 06034-4015 (US)
(72) Inventor: Hill, Mark Alexander, Lafayette, New York 13084 (US); Morelli, Mark Damian, 20044 Bernareggio (Milan) (IT); Dolan, Robert Paul, Syracuse, New York 13219 (US); James, Paul W., Windsor, Connecticut 06095 (US); Chaturvedi, Gayatri, 75001 Paris (FR); De Wolf, Thomas L., Clay, New York 13041 (US)
(74) Representative: Leckey, David Herbert

(56) References cited:
- WO-A-00/17984
- WO-A-00/36812
- WO-A-98/53581
- WO-A-99/65192

## Description

This invention relates to connecting to HVAC (Heating, Ventilation, Air Conditioning) units, and in particular, to monitoring and controlling HVAC units via the Internet and or the GSM (Global System for Mobile) Network.

HVAC equipment is becoming more and more automated. Along with this automation comes the desire to control and diagnose the equipment from a distance. Data controllers for furnaces and air conditioning equipment are frequently "smart" devices capable of transmitting data including alarms to a targeted device. This targeted device may be a dedicated computer or a computer identified for receiving the communications from the particular HVAC device. In either case, the targeted computer is the end of the communication link as opposed to any further routing of the communication. A need exists to have the ability to monitor and control HVAC devices from other than the device itself or a remote computer in a central location. WO 98/53581 discloses a networking system for controlling devices such as an airconditioning unit on demand from a workstation. When a message arrives from a workstation, a server translates the data and the network controls the device and/or sends information about the device to the workstation. WO 00/17984 and WO 99/65192 also disclose systems for controlling devices via a server.

From a first broad aspect, in accordance with the present invention there is provided a system for remotely monitoring and controlling at least one HVAC device as claimed in claim 1. In its preferred embodiments at least, the system includes a server which receives queries from an entry device and data from the HVAC device. The server is operative to form a communication link between the entry device and the HVAC device so as to allow data transfer to take place pursuant to the query. The server forms the communication link using a database of information which resides on the server and includes the location and status of the HVAC devices, as does a user name / password file, instead of in the entry device or the HVAC controller. Connection is provided over various communications links including the Internet, POTS, and GSM networks. A user with an entry device such as a handheld computer or cell phone using wireless access protocol (WAP) can change settings, obtain diagnostic information, and receive alarm messages about a plurality of HVAC devices.

According to an embodiment of the invention, a system for remotely monitoring and controlling at least one HVAC device includes a server with communications access to an entry device and the at least one HVAC device; querying means for querying the at least one HVAC device for status information on a regular basis or when requested by a message from the entry device; and means for sending the status information to the entry device in response to the querying.

According to an embodiment of the invention, a system for remotely monitoring and controlling at least one HVAC device includes a server with communications access to an entry device and the at least one HVAC device; querying means for querying the at least one HVAC device for status information when requested by a message from the entry device; means for sending the status information to the entry device in response to the querying means; means residing in the server for checking for messages from the at least one HVAC device; means residing in the server for sending an alarm message to-the entry device when an alarm message is received from the at least one HVAC device; means for automatically sending alarm messages from the at least one HVAC device through the server to the entry device; a database in the server relating to a status of the at least one HVAC device; means for automatically updating the database on a regular basis in the absence of the message from the entry device; and means for changing settings on the at least one HVAC device from the entry device.

From a further broad aspect, in accordance with the present invention there is provided a method for remotely monitoring and controlling at least one HVAC device as claimed in claim 9. In its preferred embodiments at least, the method includes the steps of (a) providing a server with communications access to an entry device and the at least one HVAC device; (b) querying the at least one HVAC device for status information when requested by a message from the entry device; and (c) sending the status information to the entry device in response to the querying means.

According to an embodiment of the invention, a method for remotely monitoring and controlling at least one HVAC device includes the steps of (a) providing a server with communications access to an entry device and the at least one HVAC device; (b) querying the at least one HVAC device for status information on a regular basis or when requested by a message from the entry device; (c) sending the status information to the entry device in response to the querying; (d) checking for messages from the at least one HVAC device; (e) automatically updating a database in the server relating to a status of the at least one HVAC device on a regular basis in the absence of the message from the entry device; and (f) changing settings on the at least one HVAC device from the entry device.

A preferred embodiment of the invention will now be described, by way of example only, with reference to the accompanying drawings in which:
Fig. 1 shows a block diagram of the hardware used according to an embodiment of the invention.
Figs. 2A-2B show a flow chart of an entry device program according to an embodiment of the invention.
Fig. 3 shows a flow chart of an interface subroutine used in an embodiment of the invention.
Fig. 4 shows a flow chart of an HVAC device program according to an embodiment of the invention.
Fig. 5 shows a flow chart of a server program according to an embodiment of the invention.
Fig. 6 shows an example of a user database structure used in an embodiment of the invention.
Fig. 7 shows an example of a unit database structure used in an embodiment of the invention.

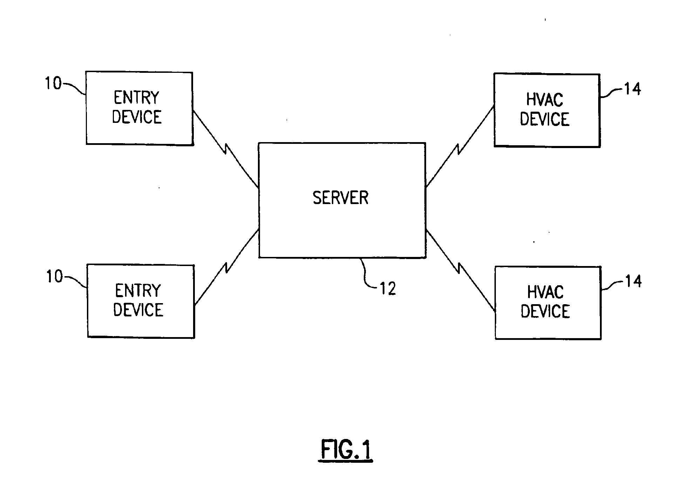

Referring to Fig. 1, an entry device 10 such as a WAP (Wireless Access Protocol) cell phone, a handheld computer, or a PDA (Personal Data Assistant) connects to a server 12 either via the Internet or a GSM/Internet interface. Entry device 10 is any device that allows a user to enter or receive data, whether over wireless or wired communication paths. Server 12 in turn is connected to an HVAC device 14 through the Internet and/or some other communication link such as the GSM Network or POTS (plain old telephone system) network. A user uses entry device 10 to access diagnostic or status information relating to HVAC device 14. Typical users include an individual owner who wishes to change a setpoint, a service technician who wishes to check diagnostic information, or a building supervisor who wishes to control a number of devices.

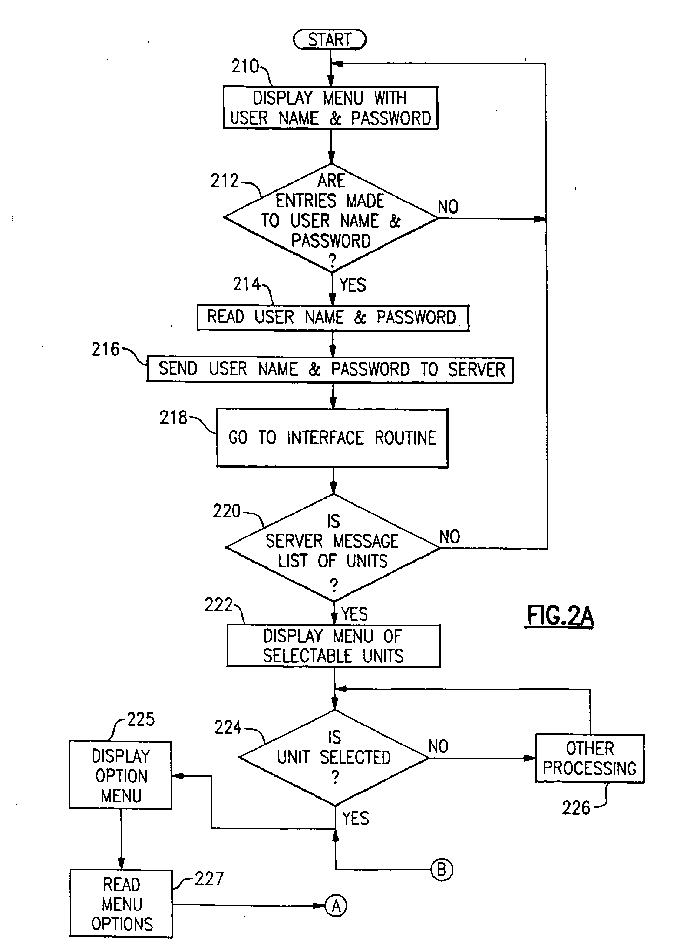

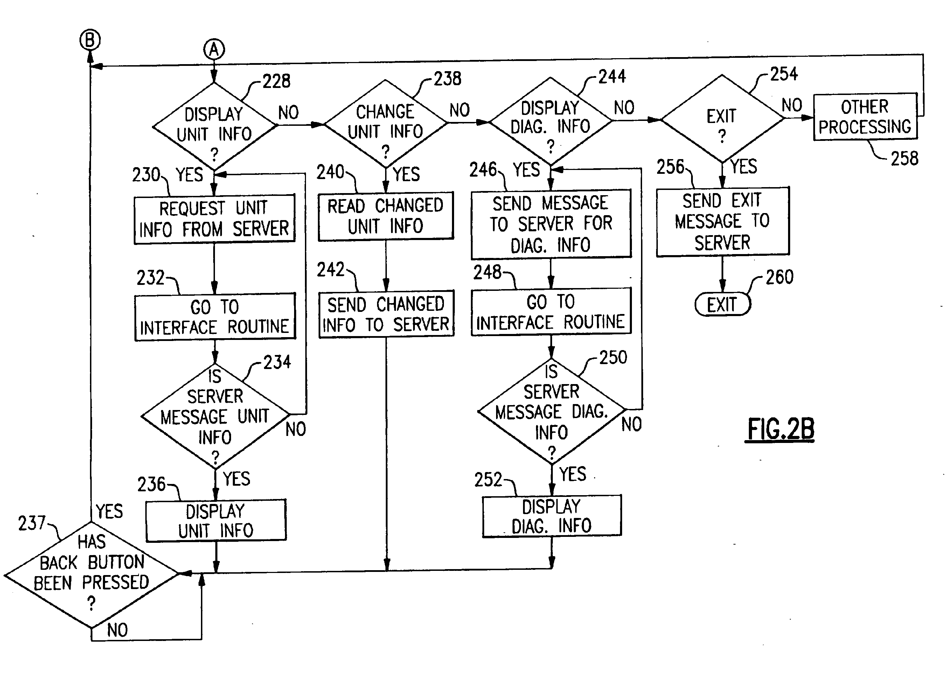

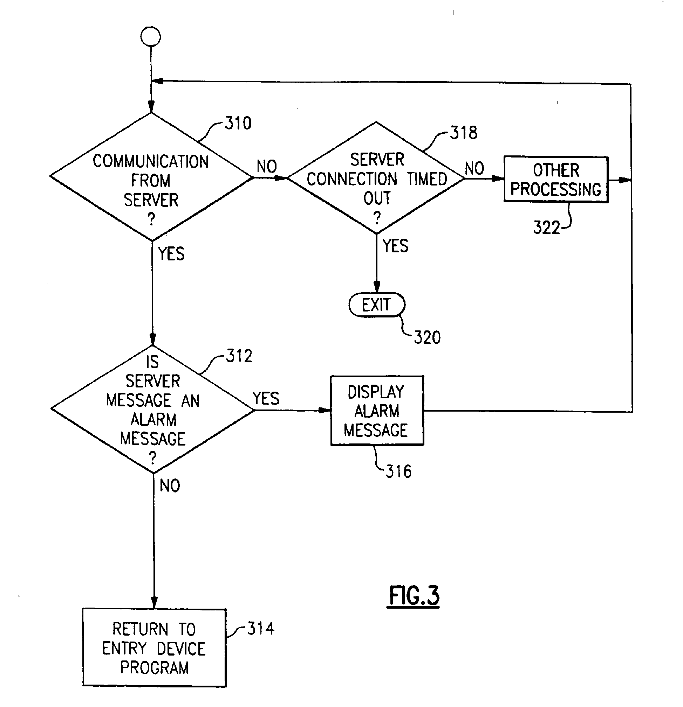

Referring to Fig. 2, an example of a program in entry device 10 is shown. The program begins by displaying a menu requesting input for a user name and password in step 210. In step 212, the program checks for entries. If no entries are received, the program cycles back to step 210. If entries are received, the entries are read in step 214 and sent to server 12 in step 216, after which an interface subroutine (Fig. 3) is invoked in step 218. The interface routine looks for messages from the server and returns control to the entry device program when a non-alarm message is received. After program control is passed back from the interface subroutine, the server message is checked in step 220 to see if the message consists of a list of units. The list of units differs depending on the user name, e.g., a homeowner only receives the units in his or her home, while a building supervisor receives the units under his supervision.

If the message consists of a list of units, the list of units is displayed in step 222. If not, control returns to the beginning of the program. In step 224, the program looks for input to see if one of the units displayed in step 222 is selected. Until a unit is selected, other system processing occurs. Once a unit is selected, a display option menu is displayed in step 225. The menu options are read in step 227. These options are shown in steps 228, 238, 244, and 254. If none of these options are chosen, other system processing occurs in step 258 and program control reverts to step 225.

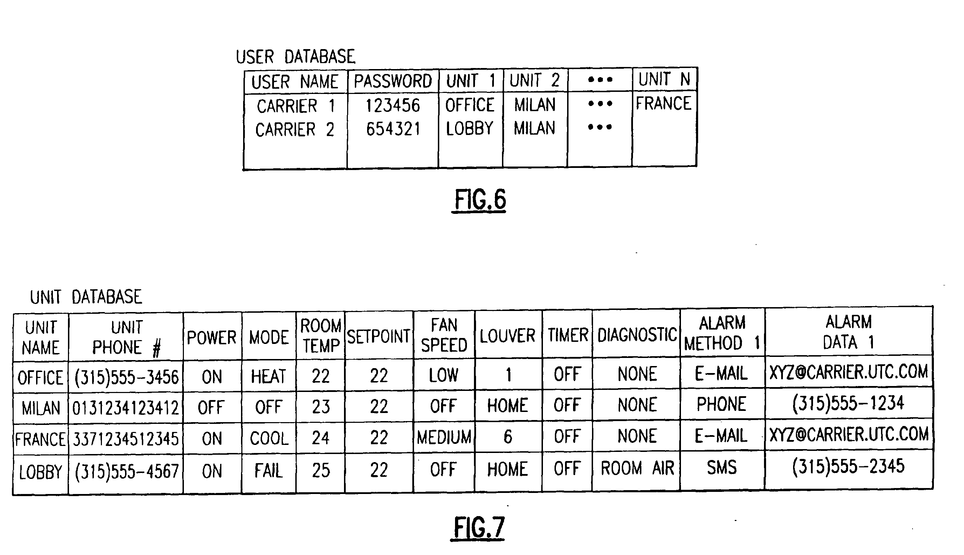

When unit information should be displayed in response to the question of step 228, the unit information is requested from server 12 in step 230. Program control then enters the interface subroutine in step 232. After control is passed back from the interface subroutine, the server message is checked in step 234 to see if it is the unit information requested. If so, the unit information, such as the room temperature, set point information, status of operability of certain components of the HVAC device as may be noted in Fig. 7. is displayed in step 236 and program control goes to step 225 after a back button is pressed in step 237.

When there is a change to the unit information in response to the question of step 238, the changed unit information is read in step 240 and the changed information sent to server 12 in step 242, after which program control goes to step 225 after the back button is pressed in step 237.

When diagnostic information should be displayed in response to the question in step 244, a message is sent to the server in step 246, after which the interface subroutine is invoked in step 248. After control is passed back from the interface subroutine, the server message is checked in step 250 to see if it is the diagnostic information requested. If not, steps 246, 248, and 250 are repeated. If so, the diagnostic information is displayed in step 252 and program control goes to step 225 after the back button is pressed in step 237.

When the user chooses to exit in step 254, an exit message is sent to server 12 in step 256 and the user exits the program in step 260.

Referring to Fig. 3, the interface subroutine checks for a communication from server 12 in step 310. If no message, the program checks in step 318 to see if the server connection has timed out. If so, the subroutine exits in step 320. If the server connection has not timed out, other processing occurs in step 322, after which the subroutine returns to step 310 to look for communications from server 12. If a message is received from server 12, it is checked in step 312 to see if it is an alarm message. If so, the alarm message is displayed in step 316 after which the subroutine returns to step 310. If the message is not an alarm message, the subroutine passes control back to the primary program in step 314.

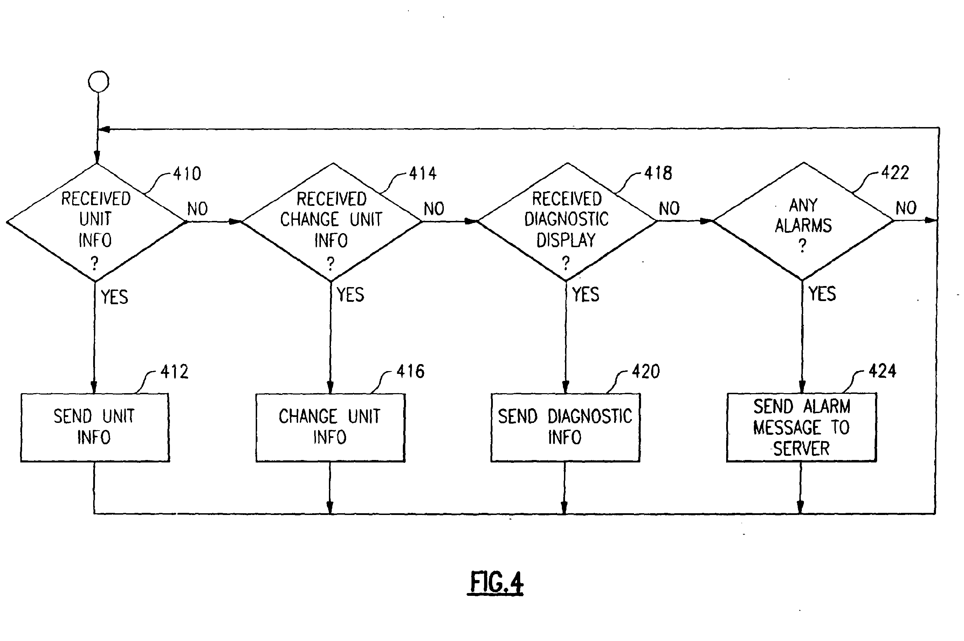

Referring to Fig. 4, an example of a program in HVAC device 14 is shown. In step 410, the program checks to see if a request for unit information has been received from server 12. If so, the unit information is sent to server 12 in step 412, after which the program returns to step 410. If no request for unit information is received, the program checks to see if a request to change the unit information has been received in step 414. If so, the unit information is changed in step 416, after which the program returns to step 410. If not, the program checks in step 418 to see if a request for diagnostic information is received, and if so, the diagnostic information is sent to server 12 in step 420. If not, the program checks for any alarms in step 422. If alarms are present, an alarm message is sent to server 12 in step 424. If no alarms are present, the program returns to step 410.

Based on the information in the database (Fig. 7), server 12 determines where and how to send an alarm message to a user or other program. The alarm method indicates how the alarm message will be sent, while the alarm data indicates the destination address or phone number where the alarm message is sent. Multiple addressees are optional.

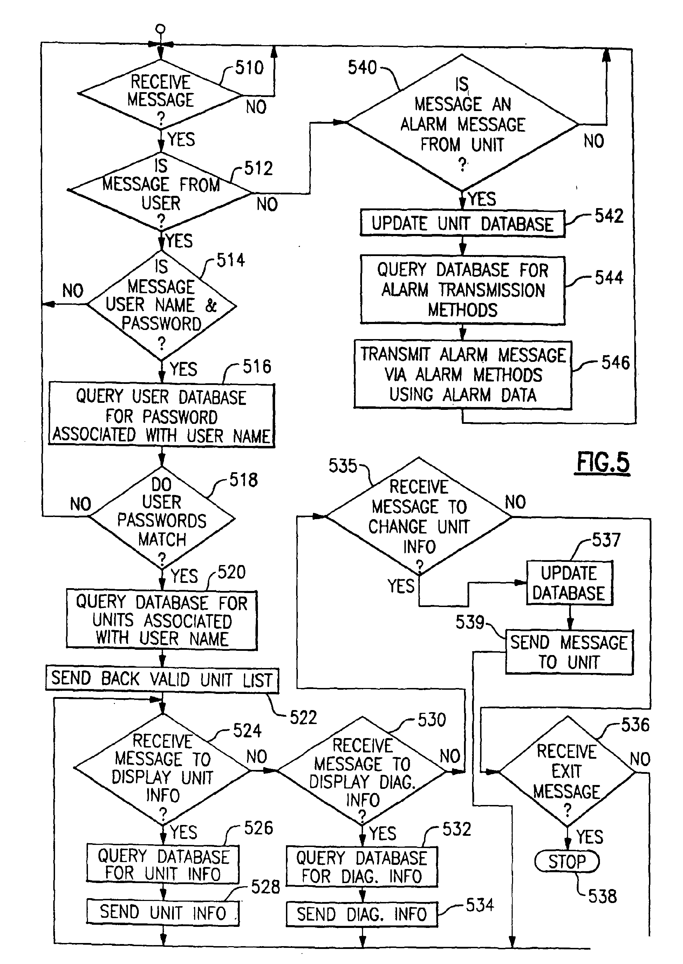

Referring to Fig. 5, an example of a server program is shown. In step 510, server 12 checks to see if a message has been received. If not, the program waits at step 510 until a message is received. Once a message is received, it is checked in step 512 to see if it is from a user, and if not, it is checked in step 540 to see if it is an alarm message from a unit. If not, control passes back to step 510. If it is an alarm message, the unit database is updated in step 542, after which the database is queried for alarm transmission methods in step 544. In step 546, the alarm message is transmitted via the alarm transmission methods, after which program control goes back to step 510.

If the message in step 512 is from a user, the message is checked in step 514 to see if the message contains the user name and password. If not, the program reverts to step 510. If so, the user database is queried in step 516 for the password associated with the user name. If the password and name don't match in step 518, the program reverts to step 510. If there is a match, the database is queried in step 520 for the HVAC units associated with the user name. A valid unit list is sent back in step 522. Then, in step 524, server 12 checks to see if a message has been received to display unit information such as that shown in Fig. 7. If so, the database is queried in step 526 for the unit information, after which the unit information is sent in step 528 and control passes to step 524.

In step 530, server 12 checks to see if a message has been received to display diagnostic information such as that shown in Fig. 7. If so, the database is queried in step 532 for the diagnostic information, after which the diagnostic information is sent in step 534. Control then passes to step 524.

In step 537, server 12 checks to see if a message has been received to change unit information such as that shown in Fig. 7. If so, the database is updated in step 537, after which a message is sent to the unit in step 539. Control then passes to step 536.

In step 536, server 12 checks to see if an exit message has been received, and if so, the program stops. If not, control passes to step 524.

Referring to Fig. 6, an example of the user database is shown. The user name is stored along with the user password and the information regarding which units are associated with the user name.

Referring to Fig. 7, an example of the unit database is shown. The items shown in the unit database are not meant to be limiting. The unit name is followed by the phone number, the power status, the mode status, the room temperature, the setpoint, the fan speed, the louver position, the timer status, diagnostic messages, alarm methods (which can include multiple alarm methods per unit), and the alarm data for sending an alarm message by one of the alarm methods. Status information on the HVAC devices which is contained in the unit database is either updated on a regular basis or when requested by a message from the entry device. That is, status information can be sent to the server by the HVAC controller on a regular basis, or the server can request the status information from the HVAC controller on a regular basis, in addition to the server requesting status information in response to a message from the entry device. The structure of the database is preferably changeable by a system administrator so as to add or delete fields monitored or controlled through the server.

While the present invention has been described with reference to a particular preferred embodiment and the accompanying drawings, it will be understood by those skilled in the art that the invention is not limited to the preferred embodiment and that various modifications and the like could be made thereto without departing from the scope of the invention as defined in the following claims. The invention may also be applied to refrigeration devices.

## Claims

1. A system for remotely monitoring and controlling at least one Heating, Ventilation, Air Conditioning, HVAC, device (14), comprising:
a server (12) with bi-directional communications access to an entry device (10) and said at least one HVAC device (14) and containing stored information relating to the status of said at least one HVAC device, and further containing stored information that includes a password and a user name that are associated with said at least one HVAC device which must be properly.identified before stored status information can be accessed by the entry device, said entry device comprising any device that allows a user to enter and receive data, whether over wireless or wired communication paths;
querying means in said server for querying said at least one HVAC device for status information for storage in said server when requested by a message from the entry device in order to detect a problem with the monitored HVAC device; and
means in the server for sending said status information to said entry device in response to said querying when the message from the entry device includes a recognised password and user name associated with said at least one HVAC device.

2. A system according to claim 1, further comprising:
means residing in said server (12) for checking for messages from said at least one HVAC device (14); and
means residing in said server for sending an alarm message to said entry device (10) when an alarm message is received from said at least one HVAC device.

3. A system according to claim 2, further comprising means for automatically sending alarm messages from said at least one HVAC device (14) through said server (12) to said entry device (10).

4. A system according to claim 1, 2 or 3, further comprising means for automatically updating said stored information on a regular basis in the absence of said message from said entry device.

5. A system according to any preceding claim, further comprising means for changing settings on said at least one HVAC device (14) from said entry device (10).

6. A system according to any preceding claim, wherein said entry device (10) is one of a handheld computer, a cell phone, and a personal data assistant.

7. A system according to any preceding claim, wherein said communications access includes connections over the Internet.

8. A system according to any preceding claim, wherein said communications access includes connections over the GSM network.

9. A method for remotely monitoring and controlling at least one Heating, Ventilation, Air Conditioning, HVAC, device (14), comprising the steps of:
providing a server (12) with bi-directional communications access to an entry device (10) and said at least one HVAC device and having a first database containing stored information relating to the status of said at least one HVAC device and a second database containing stored information that includes a password and a user name that are associated with said at least one HVAC device which must be properly identified before stored status information can be accessed by the entry device, said entry device comprising any device that allows a user to enter and receive data, whether over wireless or wired communication paths;
querying said at least one HVAC device for status information when requested by a message from said entry device; and
sending said status information to said entry device in response to said querying when the message from the entry device includes a recognised password and user name associated with said at least one HVAC device.

10. A method according to claim 9, further comprising the steps of:
checking for messages from said at least one HVAC device (14);
transferring said messages from said at least one HVAC device to said server (12); and
sending an alarm message from said server to said entry device when an alarm message is received from said at least one HVAC device.

11. A method according to claim 9, further comprising the steps of:
checking for messages from said at least one HVAC device;
automatically updating a database in said server relating to a status of said at least one HVAC device on a regular basis in the absence of said message from said entry device; and
changing settings on said at least one HVAC device from said entry device.

12. A method according to claim 11, further comprising the steps of:
sending an alarm message to said entry device (10) when an alarm message is received from said at least one HVAC device (14); and
automatically sending alarm messages from said at least one HVAC device through said server (12) to said entry device.

## Patentansprüche

1. System zum Fernüberwachen und Fernsteuern von mindestens einer Heizungs-, Ventilations-, Klimaanlagen- bzw. HVAC-Vorrichtung (14), aufweisend:
einen Server (12) mit bidirektionalem Kommunikationszugang zu einer Zugangsvorrichtung (10) und der mindestens einen HVAC-Vorrichtung (14), wobei der Server (12) gespeicherte Information hinsichtlich des Status der mindestens einen HVAC-Vorrichtung enthält und ferner gespeicherte Information enthält, die ein Passwort und einen Benutzernamen beinhaltet, die der mindestens einen HVAC-Vorrichtung zugeordnet sind und die korrekt identifiziert werden müssen, bevor die Zugangsvorrichtung auf gespeicherte Statusinformation zugreifen kann, wobei die Zugangsvorrichtung eine beliebige Vorrichtung aufweist, die einem Benutzer die Eingabe und den Empfang von Daten über drahtlose oder drahtgebundene Kommunikationswege ermöglicht;
eine Abfrageeinrichtung in dem Server zum Abfragen der mindestens einen HVAC-Vorrichtung auf Statusinformation für die Speicherung in dem Server bei Aufforderung durch eine Mitteilung von der Zugangsvorrichtung, um ein Problem bei der überwachten HVAC-Vorichtung festzustellen; und
eine Einrichtung in dem Server zum Senden der Statusinformation zu der Zugangsvorrichtung auf die Abfrage hin, wenn die Mitteilung von der Zugangsvorrichtung ein erkanntes Passwort und einen erkannten Benutzernamen beinhaltet, die der mindestens einen HVAC-Vorrichtung zugeordnet sind.

2. System nach Anspruch 1,
ferner aufweisend:
eine in dem Server (12) vorgesehene Einrichtung für die Prüfung auf Mitteilungen von der mindestens einen HVAC-Vorrichtung (14); und
eine in dem Server vorgesehene Einrichtung zum Senden einer Alarmmeldung an die Zugangsvorrichtung (10) bei Empfang einer Alarmmeldung von der mindestens einen HVAC-Vorrichtung.

3. System nach Anspruch 2,
weiterhin aufweisend eine Einrichtung zum automatischen Senden von Alarmmeldungen von der mindestens einen HVAC-Vorrichtung (14) durch den Server (12) zu der Zugangsvorrichtung (10).

4. System nach Anspruch 1, 2 oder 3,
weiterhin aufweisend eine Einrichtung zum automatischen Aktualisieren der gespeicherten Information auf einer regelmäßigen Basis bei Nicht-Vorhandensein der Mitteilung von der Zugangsvorrichtung.

5. System nach einem der vorausgehenden Ansprüche,
weiterhin aufweisend eine Einrichtung zum Ändern der Einstellungen an der mindestens einen HVAC-Vorrichtung (14) von der Zugangsvorrichtung (10) aus.

6. System nach einem der vorausgehenden Ansprüche,
wobei es sich bei der Zugangsvorrichtung (10) um' einen Taschencomputer, ein Mobiltelefon oder einen persönlichen Datenassistenten handelt.

7. System nach einem der vorausgehenden Ansprüche,
wobei der Kommunikationszugang Verbindungen über das Internet beinhaltet.

8. System nach einem der vorausgehenden Ansprüche,
wobei der Kommunikationszugang Verbindungen über das GSM-Netzwerk beinhaltet.

9. Verfahren zum Fernüberwachen und Fernsteuern von mindestens einer Heizungs-, Ventilations-, Klimaanlagen- bzw. HVAC-Vorrichtung (14), wobei das Verfahren folgende Schritte aufweist:
Bereitstellen eines Servers (12) mit bidirektionalem Kommunikationszugang zu einer Zugangsvorrichtung (10) und der mindestens einen HVAC-Vorrichtung, wobei der Server (12) eine erste Datenbank mit gespeicherter Information hinsichtlich des Status der mindestens einen HVAC-Vorrichtung aufweist und eine zweite Datenbank mit gespeicherter Information aufweist, die ein Passwort und einen Benutzernamen beinhaltet, die der mindestens einen HVAC-Vorrichtung zugeordnet sind und die korrekt identifiziert werden müssen, bevor die Zugangsvorrichtung auf gespeicherte Statusinformation zugreifen kann, wobei die Zugangsvorrichtung eine beliebige Vorrichtung aufweist, die einem Benutzer die Eingabe und den Empfang von Daten über drahtlose oder drahtgebundene Kommunikationswege ermöglicht;
Abfragen der mindestens einen HVAC-Vorrichtung auf Statusinformation bei Aufforderung durch eine Mitteilung von der Zugangsvorrichtung; und
Senden der Statusinformation zu der Zugangsvorrichtung auf die Abfrage hin, wenn die Mitteilung von der Zugangsvorrichtung ein erkanntes Passwort und einen erkannten Benutzernamen beinhaltet, die der mindestens einen HVAC-Vorrichtung zugeordnet sind.

10. Verfahren nach Anspruch 9,
das ferner folgende Schritte aufweist:
Prüfen auf Mitteilungen von der mindestens einen HVAC-Vorrichtung (14);
Transferieren der Mitteilungen von der mindestens einen HVAC-Vorrichtung zu dem Server (12); und
Senden einer Alarmmeldung von dem Server an die Zugangsvorrichtung bei Empfang einer Alarmmeldung von der mindestens einen HVAC-Vorrichtung.

11. Verfahren nach Anspruch 9,
das ferner folgende Schritte aufweist:
Prüfen auf Mitteilungen von der mindestens einen HVAC-Vorrichtung;
automatischen Aktualisieren einer Datenbank in dem Server hinsichtlich eines Status der mindestens einen HVAC-Vorrichtung auf einer regelmäßigen Basis bei Nicht-Vorhandensein der Mitteilung von der Zugangsvorrichtung; und
Ändern der Einstellungen an der mindestens einen HVAC-Vorrichtung von der Zugangsvorrichtung aus.

12. Verfahren nach Anspruch 11,
das ferner folgende Schritte aufweist:
Senden einer Alarmmeldung zu der Zugangsvorrichtung (10), wenn eine Alarmmeldung von der mindestens einen HVAC-Vorrichtung (14) empfangen wird; und
automatisches Senden von Alarmmeldungen von der mindestens einen HVAC-Vorrichtung durch den Server (12) zu der Zugangsvorrichtung.

## Revendications

1. Système pour surveiller et commander à distance au moins un dispositif de chauffage, de ventilation et de climatisation d'air, HVAC (14), comprenant:
un serveur (12) avec un accès de communications bidirectionnelles à un dispositiif d'entrée (10) et audit au moins dispositif HVAC (14) et contenant une information stockée concernant l'état dudit au moins un dispositif HVAC, et contenant en outre une information stockée qui comprend un mot de passe et un nom d'utilisateur qui sont associés audit au moins un dispositif HVAC qui doivent être correctement identifiés avant que le dispositif d'entré puisse avoir accès à l'information d'état stockée, ledit dispositif d'entrée comprenant un dispositif quelconque qui permet à un utilisateur d'entrer et de recevoir des données, qu'il s'agisse de chemins de communication sans fil ou filaires ;
des moyens de requête dans ledit serveur pour demander audit au moins un dispositif HVAC l'information d'état pour le stockage dans ledit serveur lorsqu'elle est requise par un message provenant du dispositif d'entrée afin de détecter un problème avec le dispositif HVAC surveillé ; et
des moyens dans le serveur pour envoyer ladite information d'état audit dispositif d'entrée en réponse à ladite requête lorsque le message provenant du dispositif d'entrée comprend un mot de passe et un nom d'utilisateur reconnus, associés audit au moins un dispositif HVAC.

2. Système selon la revendication 1, comprenant en outre :
des moyens se trouvant dans ledit serveur (12) pour vérifier les messages provenant dudit au moins un dispositif HVAC (14) ; et
des moyens se trouvant dans ledit serveur pour envoyer un message d'alarme audit dispositif d'entrée (10) lorsqu'un message d'alarme est reçu dudit au moins un dispositif HVAC.

3. Système selon la revendication 2, comprenant en outre des moyens pour envoyer automatiquement des messages d'alarme dudit au moins un dispositif HVAC (14) par l'intermédiaire dudit serveur (12) audit dispositif d'entrée (10).

4. Système selon la revendication 1, 2 ou 3, comprenant en outre des moyens pour mettre à jour automatiquement ladite information stockée sur une base régulière en l'absence dudit message dudit dispositif d'entrée.

5. Système selon l'une quelconque des revendications précédentes, comprenant en outre des moyens pour changer les réglages sur ledit au moins un dispositif HVAC (14) à partir dudit dispositif d'entrée (10).

6. Système selon l'une quelconque des revendications précédentes, dans lequel ledit dispositif d'entrée (10) est l'un parmi un ordinateur portable, un téléphone portable, et un assistant numérique personnel.

7. Système selon l'une quelconque des revendications précédentes, dans lequel ledit accès de communications comprend des connexions sur l'Internet.

8. Système selon l'une quelconque des revendications précédentes, dans lequel ledit accès de communications comprend des connexions sur le réseau GSM.

9. Procédé pour surveiller et commander à distance au moins un dispositif de chauffage, de ventilation et de climatisation d'air, HVAC (14) comprenant les étapes consistant à :
prévoir un serveur (12) avec un accès de communications bidirectionnelles à un dispositif d'entrée (10) et audit au moins un dispositif HVAC et ayant une première base de données contenant une information stockée concernant l'état dudit au moins un dispositif HVAC et une seconde base de données contenant l'information stockée qui comprend un mot de passe et un nom d'utilisateur qui sont associés audit au moins un dispositif HVAC qui doivent être correctement identifiés avant que le dispositif d'entrée puisse avoir accès à l'information d'état stockée, ledit dispositif d'entrée comprenant un dispositif quelconque qui permet à un utilisateur d'entrer et de recevoir des données, qu'il s'agisse de chemins de communication sans fil ou filaires ;
faire une requête audit au moins un dispositif HVAC concernant l'information d'état lorsqu'elle est demandée par un message provenant dudit dispositif d'entrée ; et
envoyer ladite information d'état audit dispositif d'entrée en réponse à ladite requête lorsque le message provenant du dispositif d'entrée comprend un mot de passe et un nom d'utilisateur reconnus associés audit au moins un dispositif HVAC.

10. Procédé selon la revendication 9, comprenant en outre les étapes consistant à :
vérifier les messages provenant dudit au moins un dispositif HVAC (14) ;
transférer lesdits messages dudit au moins un dispositif HVAC audit serveur (12) ; et
envoyer un message d'alarme dudit serveur audit dispositif d'entrée lorsqu'un message d'alarme est reçu dudit au moins un dispositif HVAC.

11. Procédé selon la revendication 9, comprenant en outre les étapes consistant à :
vérifier les messages provenant dudit au moins un dispositif HVAC ;
mettre automatiquement à jour une base de données dans ledit serveur concernant un état dudit au moins un dispositif HVAC sur une base régulière en l'absence dudit message dudit dispositif d'entrée ; et
changer les réglages sur ledit au moins un dispositif HVAC à partir dudit dispositif d'entrée.

12. Procédé selon la revendication 11, comprenant en outre les étapes consistant à :
envoyer un message d'alarme audit dispositif d'entrée (10) lorsqu'un message d'alarme est reçu dudit au moins un dispositif HVAC (14) ; et
envoyer automatiquement des messages d'alarme dudit au moins un dispositif HVAC par l'intermédiaire dudit serveur (12) audit dispositif d'entrée.
